Europäisches Patentamt

**European Patent Office**

**Office européen des brevets**

(11) Publication number: **0 030 304**
A1

# EUROPEAN PATENT APPLICATION

(21) Application number: **80107255.4**

(22) Date of filing: **21.11.80**

(51) Int. Cl.³: **B 65 B 35/26,** B 65 G 47/74

(30) Priority: **07.12.79 IT 2793879**

(43) Date of publication of application: **17.06.81**
**Bulletin 81/24**

(84) Designated Contracting States: **AT BE CH DE FR GB LI LU NL SE**

(71) Applicant: OFFICINA MECCANICA SESTESE S.A.S.,
Strada Statale 142 Km 48,5, I-28040 Paruzzaro (NO) (IT)

(72) Inventor: **Tacchini, Franco, Via Felice Casati 8, I-20124 Milano (IT)**

(74) Representative: **Vatti, Paolo, Dr. Ing. et al, Fumero - Studio Consulenza Brevetti Widenmayerstrasse 5/IV, D-8000 München 22 (DE)**

(54) **Rotary vice for forming even packs of tiles.**

(57) In a machine for packaging pieces (T) of equal size, particularly tiles and bricks in general, provision is made of a rotary vice (1) apt to form regular packs of pieces being fed irregularly. Said rotary vice (1) comprises a pair of opposed jaws (3, 4) with a plurality of arms apt to perform in a discontinuous manner movements of rotation and of mutual approach and parting around and along the axis which joins the geometrical centres of said jaws, said movements being controlled in an automatic and coordinate manner so as to allow separately the gripping, the conveyance with rotation by 90° and the release of such pieces (T), one at a time and in rapid succession, from a conveyor belt (2) which feeds them irregularly to a conveyor belt (6) onto which they are fed arranged in packs.

"ROTARY VICE FOR FORMING EVEN PACKS OF TILES"

═o✻o═o✻o═o✻o═o✻o═

The present invention relates to a rotary vice for forming even packs of equal pieces being fed irregularly, with the object of improving the packing equipment – especially the equipment for packing tiles and bricks in general – from the point of view of structural simplicity, of operating speed and efficiency and of bulk.

As known, there are already several machines for packing bricks in general and particularly tiles, by which such pieces, being fed irregularly from a conveyor belt in a substantially horizontal position, are caused to rotate by about 90° and are gathered in packs, which are then tied and packaged. In all the known machines, the ratio between the speed and frequency with which the pieces arrive and the speed which can be attributed to the devices for rotating said pieces, is such that it is usually necessary to divide the pieces and send them towards a plurality of said devices, each followed by a tying and a packaging line. This evidently complicates the construction and the operation of packaging machines and creates bulks which, in many cases, are troublesome and undesirable. Moreover, in the known machines, the pieces are being "handled" continuously and they may easily get damaged or deformed.

The object of the present invention is to prevent these drawbacks by supplying a rotary vice, apt to operate at a very high speed for causing the rotation of the pieces and the forming therewith of packs to be packaged, with a very reduced number of interventions on each piece, so that the pieces may reach the packaging machine in the best conditions and may be moved forward along a single line, with considerable simplification and saving of costs for the machine itself, greatest reduction in the bulks, improvement in the quality of the product, and equality or advantage in the production.

The rotary vice according to the invention is characterized in that it comprises a pair of opposed jaws with a plurality of arms apt to perform, in a discontinuous manner, movements of rotation and of mutual approach and parting around and along the axis which joins the geometrical centres of said jaws, said movements being controlled in an automatic and co-ordinate manner so as to allow separately the gripping, the conveyance with rotation by 90° and the release of such pieces, one at a time and in rapid succession, from a conveyor belt which feeds them irregularly to a conveyor belt onto which they are fed arranged in packs for delivery.

The invention will now be described in further detail with reference to the accompanying drawings, which illustrate a preferred practical embodiment thereof, and in which:

Fig. 1 is a general perspective view of the rotary vice according to the invention;

Fig. 2 shows schematically various stages of the working of the rotary vice of figure 1, inserted into a packaging machine, of which can be seen only stretches of the feed and delivery conveyor belts;

Fig. 3 is a front view of the vice according to the invention; and

Fig. 4 is a side view of the vice of figure 3.

The rotary vice 1 according to the invention, arranged at the outlet end of a conveyor belt 2 which feeds irregularly the pieces T to be packaged, comprises a pair of jaws 3 and 4, each formed by four arms 3a, 3b, 3c, 3d and, respectively, 4a, 4b, 4c, 4d, at 90° to each other. Said arms are apt to perform movements of rotation about the axis which joins the centres of said jaws and which concides with the axis of the headshaft 5 of a conveyor belt 6, designed to deliver from the vice 1 the pieces to be packaged. Said arms are moreover apt to perform movements of mutual approach and parting along the said axes.

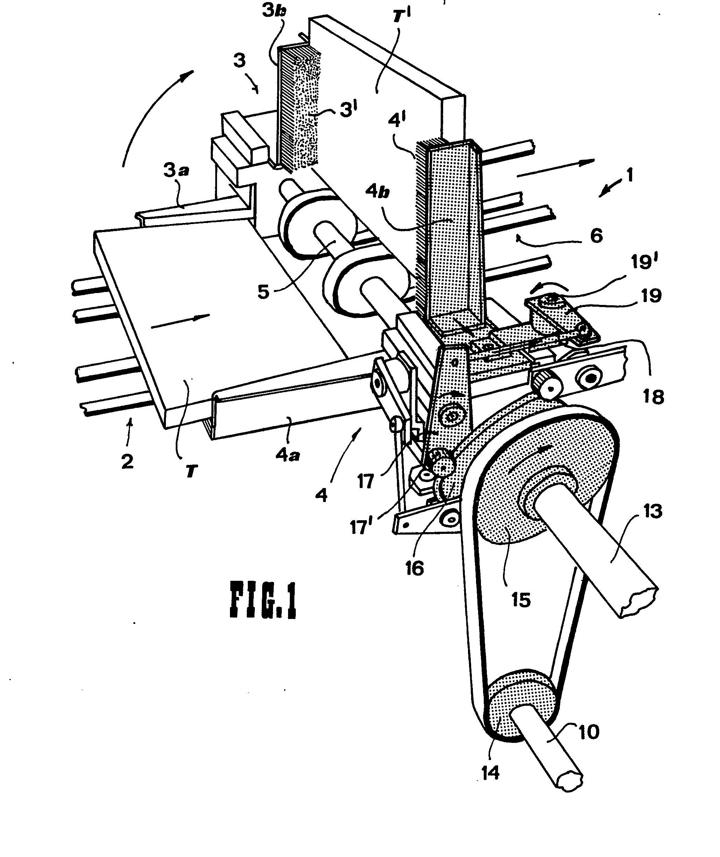

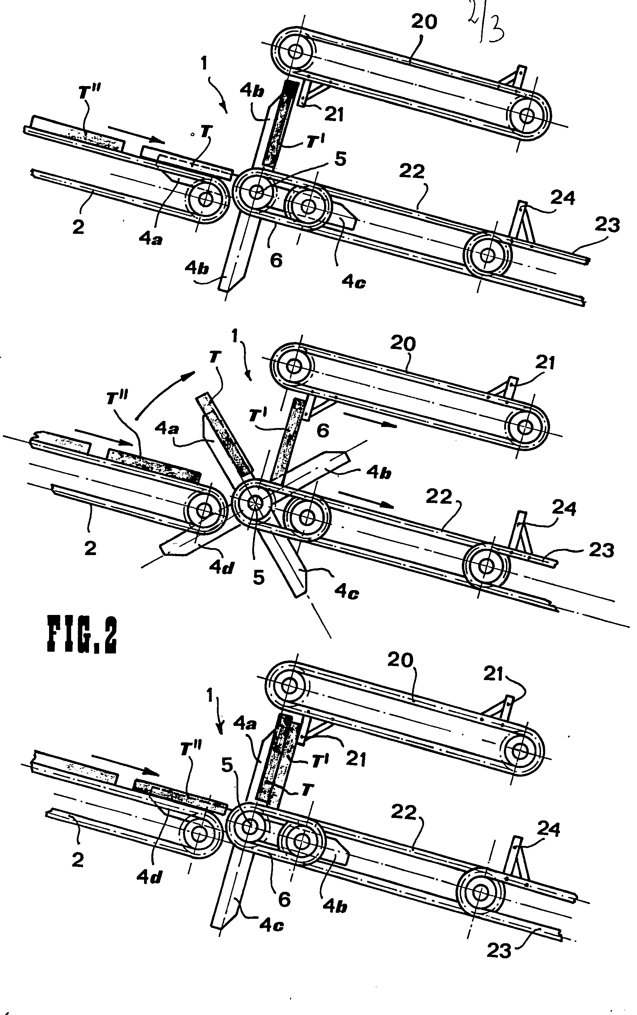

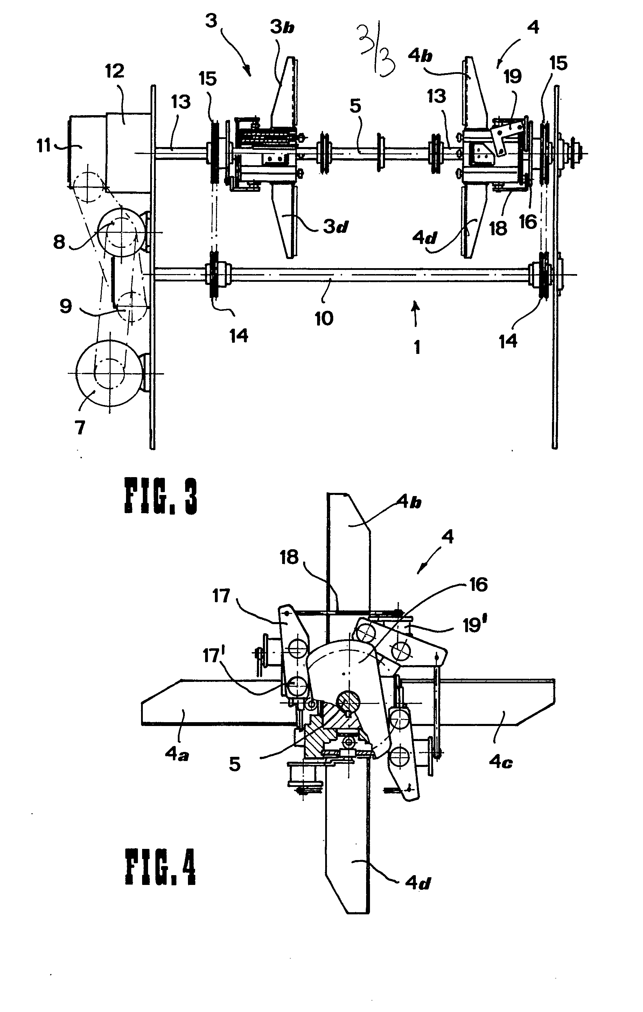

With particular reference to figures 3 and 4, it can be seen how the arms of the jaws of the rotary vice according to the invention can be caused to rotate about lateral extensions of the headshaft 5 of the conveyor 6 and can be shifted along said shaft through a transmission which is operated by an electric motor 7 and which comprises an electromagnetic clutch-brake unit 8, a reduction gear 9 which controls directly the rotation of a shaft 10, and a reduction gear 11 which controls the rotation of the headshaft 5 through an intermitting unit 12 which acts onto one of the extensions 13 of said headshaft 5. Through pairs of sprocket wheels 14, 15, connected by chains, the shaft 10 causes the rotation of cams 16 acting on levers 17 which are apt to produce the transversal movements of mutual approach and parting of the arms of jaws 3 and 4. The rotation of such arms is instead directly controlled by the headshaft 5.

More precisely, the mechanism designed to produce the transversal movement of the arms of each jaw comprises, in addition to the cam 16 and to the lever 17 (oscillating on a plane perpendicular to the rotation axis of the vice, by the action of the cam 16 which acts thereon through a cam-follower 17'), also a tie rod 18 and a bell--crank lever 19 parallel to the rotation axis of the vice, the bell-crank lever 19 being pivoted on a fixed pin 19'. The lever 19 has one end connected to the tie rod 18, which is moved by the lever 17, and the other end pivoted at 19" to the support of the arms of the jaw, said support being axially slidable onto a guide which is carried and rotated by the headshaft 5.

The working of the rotary vice according to the invention will now be briefly described with reference to the accompanying drawings.

When the piece T, fed by the belt 2, engages the pair of arms 3a, 4a, of the jaws 3, 4, of the vice 1, a member being sensitive to the presence of said piece, such as a microswitch or a photoelec-

- 4 -

tric cell or other suitable device, sets working the electromagnetic clutch-brake unit 8. Since the motor 7 is on, it causes the rotation of the reduction gear 9, which rotates the shaft 10, and of the reduction gear 11, which operates the intermitting unit 12 so as to control the rotation of the headshaft 5 according to a particular, well determined law. According to this law, through a first stage the headshaft 5 stands still and only the rotation of the shaft 10 is produced and, consequently, that of the sprocket wheels 14, 15, and of the cams 16. The leverage formed by the lever 17, by the tie rod 18 and by the bell-crank lever 19, then controls the shifting of arms 3a and 4a, one towards the other, which arms close onto the piece T gripping the same. When the closing of arms 3a, 4a, is complete, the headshaft 5 starts to rotate and - first gradually accelerating and then gradually decelerating - it causes the rotation of the jaws 3 and 4. The arms 3a and 4a thus move from the position shown in figures 1, 3, 4, to the position shifted clockwise by 90°, occupied in said figures by the arms 3b, 4b, which obviously move forward to the same extent. Figure 2 shows this movement, illustrating also an intermediate stage thereof.

When the jaws 3, 4, have reached the position shown in the final stage of figure 2, the motor 7 stops. It should be noted, with reference to this figure, that the piece T carried by arms 3a, 4a, finds itself, in this stage, leaning against the fellow piece T', previously carried by the arms 3b, 4b, and abandoned onto the conveyor belt 6 on opening of these arms of the jaws, which opening takes place in concomitance with the aforedescribed closing of arms 3a, 4a. As can be seen, the piece T' is guided on its edge opposite to that which bears onto the conveyor belt 6, by an appropriate projecting support 21 of an upper conveyor belt 20 which is associated and parallel to the conveyor belt 6. The vice 1 starts again to rotate as soon as a new piece T" engages the sensitive members which control the working of the clutch-brake unit 8. The arms 3d, 4d, then close onto the piece T", following the arms 3a, 4a, which instead open leaving the piece T on the conveyor belt 6, resting on one side against the previous piece T' and being supported on the other side by brush means 3', 4', provided on the arms of the jaws 3 and 4 (figure 1).

The removal of the piece T is effected through the cooperation of the conveyor belt 6, onto which it bears, with the conveyor belt 20, which guides it through the support 21. Both these belts move forward with short intermittent movements, step by step with the intermittent rotary movements of the vice 1. As can be seen from figure 2, the conveyor belt 6 is very short; it is associated to two other conveyor belts 22, 23, which are aligned in prosecution thereof and of which, the first one moves forward with intermittent movements (like the conveyor belts 6 and 20) co-ordinate with the rotations of the vice 1, while the second one is meant to stand still up to when the first piece T' of the pack of pieces fed from the conveyor belt 22 comes to rest on its support 24. At this stage, known means - comprising for example a pulse counter of the pieces which have to form the pack and which have been fed by the vice - drive all the belts into a continuous motion for unloading the pack of pieces, while the movements of the vice 1 stop.

A new cycle of the machine then starts for forming a second pack of pieces to be packaged.

Anyone skilled in the art will easily understand that the elementary functions required for forming a regular pack of pieces being fed irregularly - namely, gripping of the pieces arriving irregularly from a conveyor belt, rotation of such pieces, and their systematic positioning onto a second conveyor belt - can be performed with the rotary vice according to the present invention at a much higher rate (that is, with a frequency being four to five times higher) than that allowed by the systems adopted at present. The reason for this mainly lies in the fact that the pieces are efficiently held during rotation, thus allowing much higher speeds in this stage, and in the fact that the motion of rotation can be performed with gradual acceleration and deceleration.

- 6 -

The same experts will easily understand that the considerably higher working speed thus obtained, allows to arrange the whole equipment along a single line, thereby achieving the already heretofore specified advantages.

A further important advantage of the vice according to the invention is that it allows to "handle" the pieces to be transferred - always very fragile - to a very reduced extent and for a minimum number of operations, with obvious improvement in the quality of the production.

It is understood that the aforedescribed embodiment of the invention has been given by mere way of example and that there may be other practical embodiments of the rotary vice falling within the scope of the invention itself, while it may be possible to provide any variants or modifications of all such embodiments as can easily be imagined by the skilled in the art.

CLAIMS

1) Rotary vice for forming in packaging machines regular packs of pieces being fed irregularly, especially tiles and bricks in general, characterized in that it comprises a pair of opposed jaws with a plurality of arms apt to perform in a discontinuous manner movements of rotation and of mutual approach and parting around and along the axis which joins the geometrical centres of said jaws, said movements being controlled in an automatic and co-ordinate manner so as to allow separately the gripping, the conveyance with rotation by 90° and the release of such pieces, one at a time and in rapid succession, from a conveyor belt which feeds them irregularly to a conveyor belt onto which they are fed arranged in packs for delivery.

2) A rotary vice as in claim 1, wherein a single motor controls the rotation and the mutual displacement of the arms of the jaws by means of reduction gears and mechanical transmissions, the rotation through an intermitting unit and the mutual displacement directly.

3) A rotary vice as in claims 1 and 2, wherein the transmission of mutual approach and parting motion of the jaw arms is obtained through a shaft, two pairs of sprocket wheels with chain, a cam and a leverage operated by said cam and comprising a lever, a tie rod and a bell-crank lever, the tie rod and the bell-crank lever lying on a plane perpendicular to that of the lever and parallel to the axis of the shaft.

4) A rotary vice as in claims 1 to 3, wherein the rotation axis coincides with the axis of the headshaft of the conveyor belt for

- 8 -

delivery of the pieces.

5) A rotary vice as in claims 1 to 4, wherein each jaw comprises four arms at 90° to each other.

6) A rotary vice as in claims 1 to 5, wherein the motion of rotation takes place with a predetermined law, which provides for pauses in correspondence of the approach and parting movements performed by the arms of the opposite jaws, and which provides for gradual accelerations and decelerations between said arms.

7) A rotary vice as in claims 1 to 6, forming part of a machine for packaging pieces which provides for a co-ordinate system of delivery conveyor belts, apt to perform alternative intermittent and continuous movements, so as to receive a certain number of pieces from the vice itself and to respectively deliver them in the form of a pack.

8) A rotary vice as in claims 1 to 7, wherein the arms of the jaws are equipped with brush means on the sides facing each other.

**FIG.1**

**FIG.2**

3/3

**FIG. 3**

**FIG.4**

## EUROPEAN SEARCH REPORT

European Patent Office

Application number

EP 80107255.4

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | GB - A - 1 457 611 (SAPAL) ---- | | B 65 B 35/26 B 65 G 47/74 |

**TECHNICAL FIELDS SEARCHED (Int.Cl. 3)**

B 65 B 5/00
B 65 B 23/00
B 65 B 27/00
B 65 B 35/00
B 65 G 29/00
B 65 G 47/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search VIENNA | Date of completion of the search 12-02-1981 | Examiner MELZER | |

EPO Form 1503.1 06.78